# FASCICULE DE BREVET EUROPEEN

(11) **EP 1 013 984 B1**
(45) Date de publication et mention de la délivrance du brevet: **22.09.2004**
(21) Numéro de dépôt: 99403202.7
(22) Date de dépôt: 17.12.1999
(51) Int. Cl.: F16M 11/12

(54) **Dispositif de réglage en basculement de deux pièces mécaniques et procédé pour la réalisation de ce dispositif**
Vorrichtung zur Neigungseinstellung von zwei mechanischen Teilen und Herstellungsverfahren der Vorrichtung
Tilt adjusting device of two mechanical pieces and method of making the device

(30) Priorité: 23.12.1998 FR 9816349
(43) Date de publication de la demande: 28.06.2000
(73) Titulaire: Thales, 75008 Paris (FR)
(72) Inventeur: Baudu, Jean-Pierre, Thomson-CSF Propriété Intell., 94117 Arcueil Cedex (FR); Chervin, Dominique, Thomson-CSF Propriété Intell., 94117 Arcueil Cedex (FR); Vigaud, Boris, Thomson-CSF Propriété Intell., 94117 Arcueil Cedex (FR)
(74) Mandataire: Guérin, Michel

(56) Documents cités:
- EP-A- 0 283 450
- DE-A- 1 639 199
- US-A- 3 886 474

## Description

L'invention se rapporte à un dispositif de réglage en basculement de deux pièces mécaniques et a un procédé pour la réalisation de ce dispositif. Le basculement consiste en un réglage angulaire d'une pièce mécanique par rapport à une autre. Ce réglage peut se faire dans plusieurs directions. L'invention trouve par exemple son utilité dans le réglage en basculement d'un miroir par rapport à un support mécanique, réglage devant être réalisé avec une précision inférieure à la minute d'angle, comme décrit dans US-A-3 866 474.

Il est connu de réaliser le réglage en basculement au moyen de dispositifs mécaniques mettant en oeuvre un grand nombre de pièces mécaniques telles que des cames et des ressorts. Ces dispositifs imposent une procédure de réglage délicate. Le grand nombre de pièces mécaniques tend en outre à augmenter la masse et le coût du dispositif.

L'invention a pour but de simplifier les dispositifs existants. Pour atteindre ce but, l'invention a pour objet un dispositif de réglage en basculement de deux pièces mécaniques, caractérisé en ce qu'il comporte un joint souple disposé entre les deux pièces et maintenu en contact avec les deux pièces, et des moyens de réglage de la distance entre les deux pièces situées à une distance donnée du joint.

Avantageusement, le centre de rotation de la rotule est situé à l'intérieur du joint souple ce qui permet d'obtenir une grande amplitude de réglage en basculement.

L'invention a également pour objet un procédé de mise en place du joint souple entre les deux pièces mécaniques, caractérisé en ce qu'on perce un trou dans une des pièces mécaniques et en ce qu'on injecte le matériau du joint souple à travers le trou.

L'invention sera mieux comprise et d'autres avantages apparaîtront à la lecture de la description ci-après et du dessin joint dans lequel :
la figure 1 représente un premier mode de réalisation conforme à l'invention dans lequel le joint souple est sollicité essentiellement en traction ;
la figure 2 montre un second mode de réalisation d'un dispositif conforme à l'invention dans lequel le joint souple est sollicité essentiellement en compression ;
la figure 3 montre un exemple de disposition des moyens de réglage de la distance entre les deux pièces par rapport au joint souple en vue du réglage en basculement dans plusieurs directions.
la figure 4 représente en coupe un moule permettant la réalisation du joint souple ;
la figure 5 représente le moule représenté figure 4 en vue de dessus ;
la figure 6 représente un moule positionné par rapport aux deux pièces mécaniques.

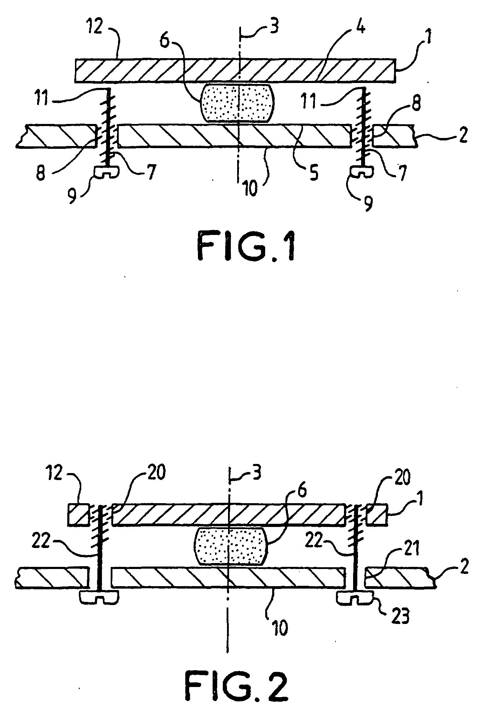

La figure 1 représente deux pièces mécaniques 1 et 2. Ces pièces sont sensiblement planes. La pièce 1 est par exemple de révolution autour d'un axe 3. Entre la face inférieure 4 de la pièce 1 et la face supérieure 5 de la pièce 2 on interpose un joint souple 6. Ce joint souple est par exemple cylindrique d'axe 3. Le joint souple est maintenu en contact, par exemple par collage, avec la face inférieure 4 et la face supérieure 5. Des moyens de réglage de la distance entre les deux pièces 1 et 2 sont par exemple réalisés au moyen de deux vis 7. La pièce 2 comportent deux trous taraudés 8. L'axe des trous taraudés 8 est sensiblement parallèle à l'axe 3. Les deux trous taraudés 8 sont situés de part et d'autre du joint 6. Dans chacun de ces trous taraudés 8, une vis 7 est vissée. Les vis 7 peuvent être sans tête. Chaque vis 7 comporte à l'une de ses extrémités un moyen 9 d'entraînement en rotation. Le moyen 9 peut consister en une empreinte avec laquelle un tournevis coopère. Le moyen 9 est situé du côté de la face inférieure 10 de la pièce 2. L'autre extrémité 11 de chaque vis 7 est en contact avec la face inférieure 4 de la pièce 1. Le réglage en basculement du dispositif est obtenu en serrant une des vis 7 et en desserrant l'autre. Ainsi l'extrémité 11 d'une des vis 7 tend à se rapprocher de la pièce 2 et l'extrémité 11 de l'autre vis 7 tend à s'en éloigner. Le joint souple fait fonction de rotule autour de laquelle la pièce 1 peut se déplacer angulairement. Ce qui permet de réaliser le réglage en basculement de la pièce 1 par rapport à la pièce 2.

La figure 2 représente les pièces 1 et 2 ainsi que le joint 6 disposés comme à la figure 1. De part et d'autre du joint 6, la pièce 1 comporte deux trous taraudés 20 d'axe sensiblement parallèle à l'axe 3. La pièce 2 comporte deux trous lisses 21. Les deux trous lisses 21 sont sensiblement dans le prolongement des trous taraudés 20. Les trous lisses 21 permettent de laisser passer librement le filetage de deux vis 22. Chaque vis 22 comportent une tête 23. Le filetage de chaque vis 22 vient se visser dans un des trous taraudés 20. La tête 23 vient en appui contre la face inférieure 10 de la pièce 2. Afin de régler le basculement de la pièce 1 par rapport à la pièce 2 on vient serrer une des vis 22 et desserrer l'autre. Ici aussi le joint 6 est utilisé comme une rotule permettant à la pièce 1 de se déplacer angulairement par rapport à la pièce 2.

Lorsque l'invention est mise en oeuvre pour régler en basculement un miroir, par rapport à un support mécanique, ont peut fixer le miroir sur la face supérieure 12 de la pièce 1, la pièce 2 servant de support mécanique.

Lorsque le dispositif est susceptible d'être soumis à des chocs ou à des vibrations, il est avantageux de précontraindre le joint souple 6. Cette précontrainte est obtenue en serrant l'ensemble des vis 7 représentées figure 1 ou l'ensemble des vis 22 représentées figure 2. Plus précisément, les vis 7 tendent à écarter la pièce 1 de la pièce 2. Ainsi le joint souple 6, représenté figure 1, est constamment soumis à des contraintes de tractions, ce qui permet d'éviter aux extrémités 11 des vis 7 de perdre le contact avec la face inférieure 4 de la pièce 1, même sous l'effet d'un choc ou d'une vibration. De la même façon, à la figure 2, les vis 22 tendent à rapprocher la pièce 1 de la pièce 2. Cette précontrainte permettra de maintenir le joint souple 6 en compression, ce qui permet d'éviter une perte de contact des têtes de vis 23 par rapport à la face inférieure 10 de la pièce 2 sous l'effet d'un choc ou d'une vibration.

Le mode de réalisation figure 1 sera de préférence utilisé lorsque l'on maîtrise l'adhérence du joint 6 sur les deux pièces 1 et 2. Le mode réalisation décrit au moyen de la figure 2 pourra être mis en oeuvre même si l'adhérence du joint 6 n'est pas correctement maîtrisée par rapport aux pièces 1 et 2.

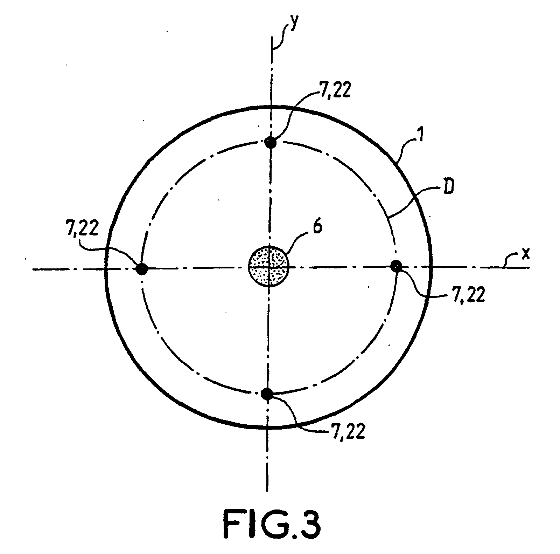

Les deux modes de réalisation représentés au moyen des figures 1 et 2 permettent de régler le basculement de la pièce 1 par rapport à la pièce 2 dans une direction. A la figure 3, on a représenté en vue de dessus un exemple de disposition des vis 7 ou 22 par rapport au joint souple 6. Cette disposition permet d'assurer le réglage en basculement dans deux directions. La pièce 1 est représentée en vue de dessus par un cercle en trait fort. Au centre de ce cercle et concentriquement à celui-ci, on a représenté le joint souple 6, également par un trait fort, mais de diamètre beaucoup plus petit que celui de la pièce 1. La position de quatre vis 7 ou 22 a également été représentée. L'axe de chaque vis est sensiblement perpendiculaire au plan de la figure 3. La position de deux de ces vis est représentée sur un axe X de la pièce 1. La position des deux autres vis 7 ou 22 est représentée sur un axe Y de la pièce 1. Les deux axes X et Y sont sensiblement perpendiculaires. Les quatre vis 7 ou 22 sont sensiblement situées sur un cercle de diamètre D. Le diamètre D est plus grand que le diamètre du joint souple 6 et plus petit que le diamètre de la pièce 1. La position des deux vis 7 ou 22 situées sur l'axe X permet de régler le basculement de la pièce 1 par rapport à la pièce 2 dans un plan perpendiculaire au plan de la figure 3 et contenant l'axe X. De la même façon, les deux vis 7 et 22 situées sur l'axe Y permettent de régler le basculement de la pièce 1 dans un plan perpendiculaire de la figure 3 et contenant l'axe Y.

La précision du réglage en basculement est fonction de deux paramètres : le diamètre D et le pas des vis 7 et 22. Ce dispositif permet d'atteindre une précision de l'ordre de trente secondes d'angle.

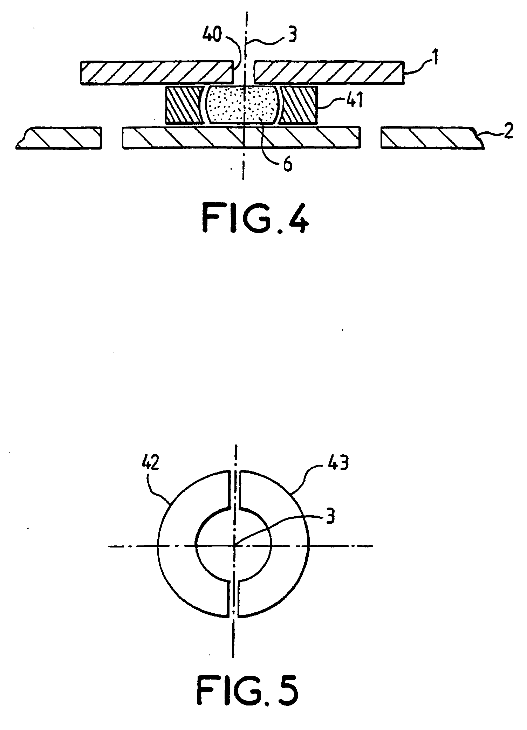

La figure 4 représente la pièce 1, la pièce 2 ainsi que le joint souple 6. Au centre de la pièce 1 on a réalisé un trou 40 sensiblement d'axe 3. Le trou 40 permet d'injecter le matériau du joint souple entre les pièces 1 et 2. Avantageusement, afin de maîtriser la longueur du joint 6 suivant l'axe 3, on peut interposer entre la pièce 1 et la pièce 2 des cales d'épaisseur afin de maintenir la distance des pièces 1 et 2 pendant l'injection du joint souple 6. Avantageusement, les cales d'épaisseur servent de moule 41. Ce moule 41 permet de maîtriser la forme et les dimensions du joint souple 6. Le moule 41 est représenté en vue de dessus figure 5. Afin de pouvoir démouler le joint souple 6, le moule 41 doit être prévu, au moins en deux parties 42 et 43 formant deux secteurs angulaires de 180° autour de l'axe 3. Les pièces 42 et 43 sont mises en places avant l'injection du matériau du joint souple 6 et sont retirées après stabilisation du joint souple. Avantageusement, le joint souple est constitué par de la colle. On choisit une colle dont le module d'Young peut par être exemple être compris entre 1 et 10 MPa.

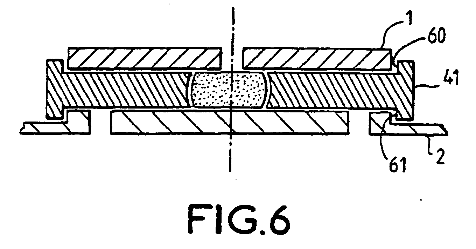

La figure 6 représente un exemple de réalisation des moyens pour positionner la pièce 1 par rapport à la pièce 2 au moyen du moule 41. Le moule 41 comporte alors un premier lamage 60 dans lequel vient se positionner la pièce 1. Le moule 41 comporte également un deuxième lamage 61 dans lequel vient se positionner la pièce 2.

Cette variante présente un avantage lorsque le joint souple 6 adhère aux pièces 1 et 2. En effet, après démoulage, le joint souple 6 maintient la position relative des pièces 1 et 2 et le réglage en basculement peut se faire suivant un des modes de réalisation décrit précédemment.

Les moyens, pour positionner la pièce 1 par rapport à la pièce 2 peuvent également être mis en oeuvre, lorsqu'on interpose des cales d'épaisseur entre les pièces 1 et 2, sans que ces cales servent de moule.

## Revendications

1. Dispositif de réglage en basculement de deux pièces (1, 2) mécaniques, comportant un joint souple (6) disposé entre les deux pièces (1, 2) et faisant fonction de rotule entre les deux pièces (1, 2), et des moyens (7, 22) de réglage de distance entre les deux pièces (1, 2), moyens (7, 22) situés à une distance donnée du joint souple (6), **caractérisé en ce que** le joint (6) comprend de la colle.

2. Dispositif selon la revendication 1, **caractérisé en ce que** les moyens de réglage (7) tendent à écarter les deux pièces (1, 2) et **en ce que** le joint souple (6) est essentiellement sollicité en traction.

3. Dispositif selon la revendication 1, **caractérisé en ce que** les moyens de réglage (22) tendent a rapprocher les deux pièces (1, 2) et **en ce que** le joint souple (6) est essentiellement sollicité en compression.

4. Dispositif selon l'une des revendications précédentes, **caractérisé en ce que** le centre de rotation de la rotule est situé à l'intérieur du joint souple (6).

5. Dispositif selon l'une des revendications précédentes, **caractérisé en ce que** la colle a un module d'Young compris entre 1 et 10 MPa

6. Dispositif selon l'une des revendications précédentes, **caractérisé en ce que** les moyens de réglage comportent plusieurs vis (7 ; 22).

7. Dispositif selon la revendication 6, **caractérisé en ce que** les vis (7 ; 22) sont au nombre de 4, **en ce que** leur axe est sensiblement sécant d'un cercle au centre duquel le joint souple (6) est situé .

8. Dispositif selon la revendication 7, **caractérisé en ce que** les intersections des axes des vis (7 ; 22) avec le cercle sont situées de façon à permettre un réglage en basculement dans deux directions sensiblement perpendiculaires.

9. Procédé de mise en place d'un joint souple (6) entre deux pièces (1, 2) mécaniques selon la revendication 1, **caractérisé en ce qu'**on perce un trou (40) dans une des pièces (1) mécaniques et qu'on injecte le matériau du joint souple (6) à travers le trou (40).

10. Procédé selon la revendication 9, **caractérisé en ce que** pendant l'injection du matériau, on interpose entre les pièces (1, 2) des moyens (41, 42, 43) pour maintenir la distance entre les deux pièces (1, 2).

11. Procédé selon la revendication 10, **caractérisé en ce que** les moyens pour maintenir la distance entre les deux pièces (1, 2) forment un moule (41, 42, 43) permettant de maîtriser la forme et les dimensions du joint souple (6) et **en ce que** le moule (41, 42, 43) est retiré après stabilisation de la forme du joint souple (6).

12. Procédé selon l'une quelconque des revendications 10 ou 11, **caractérisé en ce que** les moyens (41, 42, 43) pour maintenir la distance entre les deux pièces (1, 2) comportent des moyens (60, 61) pour positionner les pièces (1, 2) entres elles.

## Patentansprüche

1. Vorrichtung zur Neigungseinstellung von zwei mechanischen Teilen (1, 2), die eine nachgiebige Dichtung (6) umfasst, die zwischen den beiden Teilen (1, 2) angeordnet ist und zwischen den beiden Teilen (1, 2) die Funktion eines Kugelgelenkes einnimmt, und Abstandseinstellmittel (7, 22) zwischen den beiden Teilen (1, 2), wobei die Mittel (7, 22) in einem gegebenen Abstand zu der nachgiebigen Dichtung (6) angeordnet sind, **dadurch gekennzeichnet, dass** die Dichtung (6) Klebstoff umfasst.

2. Vorrichtung nach Anspruch 1, **dadurch gekennzeichnet, dass** die Einstellmittel (7) dazu neigen, die beiden Teile (1, 2) voneinander zu entfernen, und dass die nachgiebige Dichtung (6) im Wesentlichen einer Zugbeanspruchung unterliegt.

3. Vorrichtung nach Anspruch 1, **dadurch gekennzeichnet, dass** die Einstellmittel (22) dazu neigen, die beiden Teile (1, 2) einander anzunähern, und dass die nachgiebige Dichtung (6) im Wesentlichen einer Druckbeanspruchung unterliegt.

4. Vorrichtung nach einem der vorhergehenden Ansprüche, **dadurch gekennzeichnet, dass** der Drehpunkt des Kugelgelenkes im Inneren der nachgiebigen Dichtung (6) angeordnet ist.

5. Vorrichtung nach einem der vorhergehenden Ansprüche, **dadurch gekennzeichnet, dass** der Klebstoff ein Elastizitätsmodul aufweist, das zwischen 1 und 10 MPa liegt.

6. Vorrichtung nach einem der vorhergehenden Ansprüche, **dadurch gekennzeichnet, dass** die Einstellmittel mehrere Schrauben (7; 22) umfassen.

7. Vorrichtung nach Anspruch 6, **dadurch gekennzeichnet, dass** die Anzahl der Schrauben (7; 22) vier beträgt, dass ihre Achse im Wesentlichen einen Kreis schneidet, in dessen Mitte die nachgiebige Dichtung (6) angeordnet ist.

8. Vorrichtung nach Anspruch 7, **dadurch gekennzeichnet, dass** die Schnittpunkte der Achsen der Schrauben (7; 22) derart zu dem Kreis angeordnet sind, dass eine Neigungseinstellung in zwei im Wesentlichen senkrecht verlaufenden Richtungen ermöglicht wird.

9. Verfahren zur Anordnung einer nachgiebigen Dichtung (6) zwischen zwei mechanischen Teilen (1, 2) nach Anspruch 1, **dadurch gekennzeichnet, dass** ein Loch (40) in eines der mechanischen Teile (1) gebohrt wird, und dass das Material der nachgiebigen Dichtung (6) durch das Loch (40) hindurch eingepresst wird.

10. Verfahren nach Anspruch 9, **dadurch gekennzeichnet, dass**, während der Einpressung des Materiales, Mittel (41, 42, 43) zwischen die Teile (1, 2) eingefügt werden, um den Abstand zwischen den beiden Teilen (1, 2) aufrechtzuerhalten.

11. Verfahren nach Anspruch 10, **dadurch gekennzeichnet, dass** die Mittel, um den Abstand zwischen den beiden Teilen (1, 2) aufrechtzuerhalten, eine Spritzform (41, 42, 43) ausbilden, die es ermöglicht, die Gestalt und die Abmessungen der nachgiebigen Dichtung (6) zu bestimmen, und dass die Spritzform (41, 42, 43) nach der Stabilisierung der Gestalt der nachgiebigen Dichtung (6) entfernt wird.

12. Verfahren nach einem der Ansprüche 10 oder 11, **dadurch gekennzeichnet, dass** die Mittel (41, 42, 43), um den Abstand zwischen den beiden Teilen (1, 2) aufrecht zu erhalten, Mittel (60, 61) umfassen, um die Teile (1, 2) untereinander anzuordnen.

## Claims

1. Tilt-adjusting device for two mechanical parts (1, 2), comprising a flexible coupling (6) placed between the two parts (1, 2) and acting as a ball joint between the two parts (1, 2), and means (7, 22) for adjusting the distance between the two parts (1, 2), these means (7, 22) being located at a given distance from the flexible coupling (6), **characterized in that** the coupling (6) comprises adhesive.

2. Device according to Claim 1, **characterized in that** the adjusting means (7) tend to move the two parts (1, 2) away from one another, and **in that** the flexible coupling (6) is essentially subjected to tensile forces.

3. Device according to Claim 1, **characterized in that** the adjusting means (22) tend to move the two parts (1, 2) towards one another, and **in that** the flexible coupling (6) is essentially subjected to compressive forces.

4. Device according to one of the preceding claims, **characterized in that** the centre of rotation of the ball joint is located inside the flexible coupling (6).

5. Device according to one of the preceding claims, **characterized in that** the adhesive has a Young's modulus of between 1 and 10 MPa.

6. Device according to one of the preceding claims, **characterized in that** the adjusting means comprise several screws (7; 22).

7. Device according to Claim 6, **characterized in that** there are four screws (7; 22), and **in that** the axis thereof is substantially secant to a circle at the centre of which the flexible coupling (6) is located.

8. Device according to Claim 7, **characterized in that** the intersections of the axes of the screws (7; 22) with the circle are located in such a way as to allow tilt adjustment in two substantially perpendicular directions.

9. Method of placing a flexible coupling (6) between two mechanical parts (1, 2) according to Claim 1, **characterized in that** a hole (40) is drilled into one of the mechanical parts (1), and **in that** the material of the flexible coupling (6) is injected through the hole (40).

10. Method according to Claim 9, **characterized in that**, during the injection of the material, means (41, 42, 43) for maintaining the distance between the two parts (1, 2) are interposed between the parts (1, 2).

11. Method according to Claim 10, **characterized in that** the means for maintaining the distance between the two parts (1, 2) form a mould (41, 42, 43) allowing control over the shape and the dimensions of the flexible coupling (6), and **in that** the mould (41, 42, 43) is withdrawn after the shape of the flexible coupling (6) has stabilized.

12. Method according to either one of Claims 10 and 11, **characterized in that** the means (41, 42, 43) for maintaining the distance between the two parts (1, 2) comprise means (60, 61) for positioning the parts (1, 2) with respect to one another.
